# EUROPÄISCHE PATENTANMELDUNG

(11) **EP 1 057 699 A2**
(43) Veröffentlichungstag der Anmeldung: **06.12.2000**
(21) Anmeldenummer: 00110150.0
(22) Anmeldetag: 12.05.2000
(51) Int. Cl.: B60R 21/24

(54) **Gassack für ein Fahrzeuginsassen-Rückhaltesystem sowie Verfahren zum Entfalten eines Gassacks**

(30) Priorität: 20.05.1999 DE 29908915 U
(71) Anmelder: TRW Automotive Safety Systems GmbH & Co. KG, 63743 Aschaffenburg (DE)
(72) Erfinder: Frisch, Ralph, 63776 Mömbris (DE)
(74) Vertreter: Sties, Jochen, Dipl.-Ing.

(57) **Zusammenfassung**

Ein Gassack für ein Fahrzeuginsassen-Rückhaltesystem, mit einer ersten Wand (10), die mit einer Öffnung (14) verbunden ist, und einer zweiten Wand (12), die der ersten gegenüberliegt, ist dadurch gekennzeichnet, daß mindestens eine Reißnaht (20, 22, 24, 26) vorgesehen ist, welche die erste und die zweite Wand (10, 12) miteinander verbindet, wobei die Reißnaht (20, 22, 24, 26) so ausgebildet ist, daß sie im intakten Zustand einen Ringraum (28) vordefiniert und im gerissenen Zustand ein vollständiges Entfalten des Gassacks ermöglicht.

## Beschreibung

Die Erfindung betrifft einen Gassack für ein Fahrzeuginsassen-Rückhaltesystem, mit einer ersten Wand, die mit einer Öffnung für Druckgas verbunden ist, und einer zweiten Wand, die der ersten gegenüberliegt.

Solche Gassäcke sind in den verschiedensten Ausgestaltungen bekannt. Ein Problem, das bei allen Gassäcken gelöst werden muß, besteht darin, die sogenannte Anschulßgefahr für den zurückzuhaltenden Fahrzeuginsassen zu verringern. Unter Anschußgefahr wird das Risiko verstanden, daß der Fahrzeuginsasse von Teilen der Wandung des Gassacks, die sich mit sehr hoher Geschwindigkeit beim Entfalten in Richtung zum Fahrzeuginsassen hin bewegen, berührt und schlimmstenfalls verletzt wird.

Erfindungsgemäß wird die Anschußgefahr dadurch beseitigt, daß mindestens eine Reißnaht vorgesehen ist, welche die erste und die zweite Wand miteinander verbindet, wobei die Reißnaht so ausgebildet ist, daß sie im intakten Zustand einen Ringraum vordefiniert und im gerissenen Zustand ein vollständiges Entfalten des Gassacks ermöglieht. Erfindungsgemäß wird der Gassack somit in zwei Stufen entfaltet. In einer ersten Stufe, in der die Reißnaht intakt ist, wird das in den Gassack eingeleitete Druckgas nur dazu verwendet, den Ringraum zu entfalten. Dieser Ringraum hat aufgrund der Reißnähte nur eine sehr geringe Höhe, so daß keinerlei Anschußgefahr für den Fahrzeuginsassen existiert. Die Bildung des Ringraums führt dazu, daß der Gassack sieh vielmehr zuerst seitlich auf annähernd seine vollständige Größe entfaltet. Erst nachdem der Ringraum vollständig gefüllt ist und das weiter in den Gassack einströmende Druckgas zu einer solchen Druckerhöhung führt, daß die Reißnähte reißen, entfaltet sieh der Gassack zum Fahrzeuginsassen hin auf sein gesamtes Volumen. Auch in dieser zweiten Stufe des Entfaltens ist die Anschußgefahr wesentlich verringert, da der Gassack bereits wenigstens annähernd seine späteren Abmessungen in seitlicher Richtung erreicht hat. Somit ist verhindert, daß die dem Fahrzeuginsassen zugewandten Teile der Wandung des Gassacks erst übermäßig weit zum Fahrzeuginsassen hin vordringen können und anschließend, wenn sich der Gassack in seitlicher Richtung ausdehnt, wieder vom Fahrzeuginsassen weggezogen werden.

Vorteilhafte Ausgestaltungen der Erfindung ergeben sich aus den Unteransprüchen.

Die Erfindung wird nachfolgend unter Bezugnahme auf eine bevorzugte Ausführungsform beschrieben, die in den beigefügten Zeichnungen dargestellt ist. In diesen zeigen:
- Figur 1 eine Draufsicht auf einen erfindungsgemäßen Gassack; und
- Figur 2 in einer Schnittansieht entlang der Ebene II-II von Figur 1 den Gassack von Figur 1 in verschiedenen Stufen während des Entfaltens.

Der Gassack besteht aus einer ersten Wand 10 und einer zweiten Wand 12. In der ersten Wand 10 ist eine Öffnung 14 vorgesehen, in der ein Gasgenerator 16 angeordnet ist. Der Gasgenerator stellt nach Aktivierung das Druckgas bereit, mit dem der Gassack entfaltet wird. Die Öffnung 14 könnte alternativ als Einströmöffnung für Druckgas dienen, das von einem externen Gasgenerator erzeugt wird.

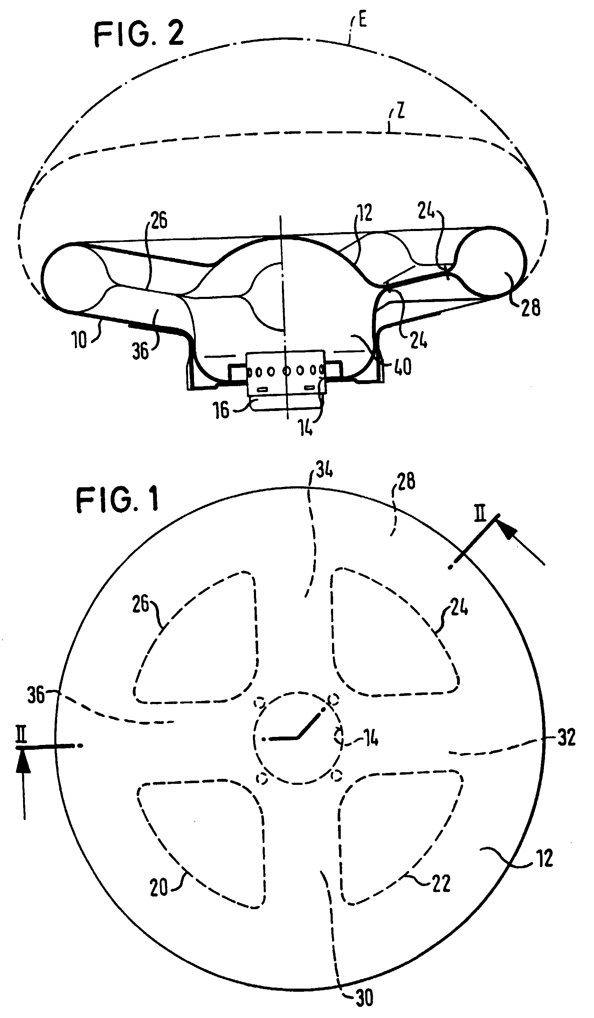

Die erste und die zweite Wand des Gassacks sind im Ausgangszustand durch vier Reißnähte 20, 22, 24, 26 miteinander verbunden. Jede Reißnaht hat eine etwa dreieckige Form, so daß von jeder Reißnaht ein etwa dreieckiges Gewebeteil abgenäht ist. Die Reißnähte 20, 22, 24, 26 sind so dimensioniert und angeordnet, daß ein Ringraum 28 vordefiniert ist, der sieh entlang dem Außenumfang des Gassacks erstreckt. Ferner ist zwischen je zwei benachbarten Reißnähten jeweils ein Kanalabschnitt 30, 32, 34, 36 gebildet, der sieh jeweils vom Bereich der Öffnung 14 in etwa radialer Richtung hin zum Ringraum 28 erstreckt. In der Draufsicht von Figur 1 gesehen ist die Gestaltung vergleichbar mit einem Rad mit vier radialen Speichen, wobei der Radkranz und die Speichen zusammen ein Volumen für das in den Gassack eingebrachte Druckgas bilden.

In Figur 2 ist in durchgehenden Linien die Gestalt des Gassacks in einer ersten Stufe des Entfaltens gezeigt. Am Ende dieser ersten Stufe sind die Reißnähte 20, 22, 24, 26 noch intakt. Somit bildet sich im Bereich der Öffnung 14 eine Einströmkammer 40, von der ausgehend das Druckgas über die Kanalabschnitte 30, 32, 34, 36 in den Ringraum 28 strömt. Der Gassack wird daher zunächst bei insgesamt geringer Höhe in seitlicher Richtung entfaltet. Die Einströmkammer 40 hat eine maximale Höhe, die nicht über das von dem Ringraum 28 definierte Niveau hervorsteht.

Wenn nachfolgend auf diese erste Stufe der Druck im Gassack weiter ansteigt, werden die Reißnähte geöffnet. Dadurch kann sich der Gassack über den in Figur 2 mit Z bezeichneten Zwischenzustand in den mit E bezeichneten Endzustand entfalten.

## Patentansprüche

1. Gassack für ein Fahrzeuginsassen-Rückhaltesystem, mit einer ersten Wand (10), die mit einer Öffnung (14) verbunden ist, und einer zweiten Wand (12), die der ersten gegenüberliegt,
dadurch gekennzeichnet, daß mindestens eine Reißnaht (20, 22, 24, 26) vorgesehen ist, welche die erste und die zweite Wand (10, 12) miteinander verbindet, wobei die Reißnaht (20, 22, 24, 26) so ausgebildet ist, daß sie im intakten Zustand einen Ringraum (28) vordefiniert und im gerissenen Zustand ein vollständiges Entfalten des Gassacks ermöglicht.

2. Gassack nach Anspruch 1, dadurch gekennzeichnet, daß die ersten und die zweite Wand (10, 12) allgemein kreisförmig sind und vier Reißnähte (20, 22, 24, 26) vorgesehen sind, die im intakten Zustand jeweils einen allgemein dreieckigen Bereich abnähen, wobei zwischen benachbarten Reißnähten jeweils ein Kanalabschnitt (30, 32, 34, 36) gebildet ist, der die Öffnung (14) mit dem Ringraum (28) verbindet.

3. Gassack nach Anspruch 2, dadurch gekennzeichnet, daß die Reißnähte (20, 22, 24, 26) so angeordnet sind, daß im Bereich der Öffnung (14) eine Einströmkammer (40) gebildet ist, deren maximale Höhe, solange die Reißnähte (20, 22, 24, 26) intakt sind, ein vom Ringraum vorgegebenes Niveau nicht überschreitet.

4. Verfahren zum Entfalten eines Gassacks für ein Fahrzeuginsassen-Rückhaltesystem, wobei der Gassack eine erste Wand (10) aufweist, die mit einer Öffnung (14) versehen ist, durch die Druckgas in den Gassack einströmen kann, eine zweite Wand (12), die der ersten gegenüberliegt, sowie mindestens eine Reißnaht (20, 22, 24, 26), welche die erste und die zweite Wand (10, 12) miteinander verbindet, wobei das Verfahren die folgenden Schritte aufweist:
- es wird Druckgas in den Gassack geleitet;
- das Druckgas wird in einer ersten Phase, in der die Reißnaht intakt ist, nur dazu verwendet, den Ringraum zu entfalten, so daß der Gassack sich zuerst im wesentlichen seitlich auf annähernd seine vollständige Größe entfaltet;
- erst nachdem der Ringraum nahezu vollständig gefüllt ist und das weiter in den Gassack einströmende Druckgas zu einer solchen Druckerhöhung führt, daß die Reißnähte reißen, entfaltet sich der Gassack zum Fahrzeuginsassen hin auf sein gesamtes Volumen.
